# EUROPEAN PATENT APPLICATION

(11) **EP 2 940 763 A1**
(43) Date of publication of application: **04.11.2015**
(21) Application number: 13868877.5
(22) Date of filing: 24.12.2013
(51) Int. Cl.: H01M 4/60, H01M 4/38, H01M 4/587, H01M 4/62, H01M 10/0566, H01M 10/0585

(54) **POSITIVE ELECTRODE FOR NONAQUEOUS ELECTROLYTE SECONDARY BATTERY, NONAQUEOUS ELECTROLYTE SECONDARY BATTERY USING POSITIVE ELECTRODE, AND METHOD FOR PRODUCING POSITIVE ELECTRODE**

(30) Priority: 28.12.2012 JP 2012288153
(71) Applicant: Nitto Denko Corporation, Ibaraki-shi, Osaka 567-8680 (JP)
(72) Inventor: TAKE Hiroyoshi, Ibaraki-shi Osaka 567-8680 (JP); MATSUURA Aimi, Ibaraki-shi Osaka 567-8680 (JP); ANDO Yohei, Ibaraki-shi Osaka 567-8680 (JP)
(74) Representative: Hoffmann Eitle
(86) International application number: PCT/JP2013/084467
(87) International publication number: WO 2014/104006

(57) **Abstract**

A positive electrode for a nonaqueous electrolyte secondary battery containing an electrically conductive polymer (a), at least one of a polyanionic acid and a metal salt thereof (b), and a plasticizer (c), wherein the nonaqueous electrolyte secondary battery includes a positive electrode, a negative electrode, a separator disposed between the positive electrode and the negative electrode, and an electrolyte solution having ion conductivity. The positive electrode has excellent peeling resistance and bending durability, and the nonaqueous electrolyte secondary battery having an excellent weight energy density and low dependency on electrolyte solution amount is provided.

## Description

### TECHNICAL FIELD

The present invention relates to a positive electrode for a nonaqueous electrolyte secondary battery, a nonaqueous electrolyte secondary battery using the positive electrode and a method for manufacturing the nonaqueous electrolyte secondary battery, and particularly to a positive electrode having excellent peeling resistance and bending durability, a nonaqueous electrolyte secondary battery that has an excellent weight energy density and low dependency on electrolyte solution amount, and a method for manufacturing the nonaqueous electrolyte secondary battery.

### BACKGROUND ART

With recent improvement and advancement of electronics technology for mobile PCs, mobile phones, personal digital assistants (PDAs), etc., secondary batteries and the like, which can be repeatedly charged and discharged, are widely used as power storage devices for these electronic apparatuses.

Of these secondary batteries, a lithium-ion secondary battery, which includes a positive electrode prepared by using a lithium-containing transition metal oxide, such as lithium manganese oxide or lithium cobalt oxide, as an electrode active material and a negative electrode prepared by using a carbon material capable of lithium ion insertion/extraction, is in widespread use.

A lithium-ion secondary battery, however, is a battery that generates electric energy through an electrochemical reaction. The aforementioned lithium-ion secondary battery with a lithium-containing transition metal oxide in a positive electrode has a critical problem of a lower power density because of its lower electrochemical reaction rate. The lithium-ion secondary battery still has room for improvement in capacity density per unit weight because of a large specific gravity of the lithium-containing transition metal oxide.

There is also known a nonaqueous electrolyte secondary battery in which an electrically conductive polymer, such as a polyaniline, containing a dopant is used as a positive electrode active material to improve the power density (see PTL1). In general, however, since the secondary battery employing the electrically conductive polymer as the positive electrode active material is of an anion migration type in which the polymer of the positive electrode is doped with an anion in a charge period and dedoped with the anion in a discharge period, the secondary battery is a so-called reserve type secondary battery in which an ion concentration in an electrolyte solution varies during charge/discharge. Accordingly, the nonaqueous electrolyte secondary battery employing the electrically conductive polymer as the positive electrode active material basically requires a large amount of an electrolyte solution, and therefore the nonaqueous electrolyte secondary battery has a problem that it is impossible to contribute to the size reduction of the battery.

In order to solve this problem, a secondary battery of a cation migration type is proposed, which is substantially free from change in the ion concentration in the electrolyte solution by using an electrically conductive polymer containing a polymer anion, such as polyvinyl sulfonate, as a dopant for the positive electrode (see PTL 2).

### RELATED ART DOCUMENT

### PATENT DOCUMENTS

PATENT DOCUMENT 1: JP-A-HEI3(1991)-129679
PATENT DOCUMENT 2: JP-A-HEI1(1989)-132052

### SUMMARY OF INVENTION

However, the secondary battery described above is still insufficient in performance. That is, the secondary battery is lower in weight energy density than the lithium secondary battery which employs the lithium-containing transition metal oxide, such as lithium manganese oxide or lithium cobalt oxide, for the positive electrode. Not only that, since a positive electrode of the secondary battery is relatively hard, the electrode cracks and peels off when subjected to bending or during its production process.

The present invention was made to cope with the aforementioned problems, and it is an object of the present invention to provide a positive electrode having excellent peeling resistance and bending durability, a nonaqueous electrolyte secondary battery that has an excellent weight energy density and low dependency on electrolyte solution amount, and a method for manufacturing the nonaqueous electrolyte secondary battery.

According to a first aspect of the present invention, there is provided a positive electrode for a nonaqueous electrolyte secondary battery comprising an electrically conductive polymer (a), at least one of a polyanionic acid and a metal salt thereof (b), and a plasticizer (c), wherein the nonaqueous electrolyte secondary battery includes a positive electrode, a negative electrode, a separator disposed between the positive electrode and the negative electrode, and an electrolyte solution having ionic conductivity.

According to a second aspect of the present invention, there is provided a nonaqueous electrolyte secondary battery including the positive electrode according to the first aspect.

According to a third aspect of the present invention, there is provided a method for manufacturing a nonaqueous electrolyte secondary battery, the method including steps (I) to (III) below:
(I) a step of preparing a positive electrode and a negative electrode, and disposing a separator between the positive electrode and the negative electrode to produce a stacked component including the positive electrode, the separator and the negative electrode;
(II) a step of housing at least one of the stacked component in a battery container; and
(III) a step of pouring an electrolyte solution into the battery container,
wherein the positive electrode contains an electrically conductive polymer (a), at least one of a polyanionic acid and a metal salt thereof (b), and a plasticizer (c), and
wherein the negative electrode contains a base metal or a material capable of base metal ion insertion/extraction.

In order to solve the aforementioned problems, the present inventors conducted earnest investigations, and consequently they developed a positive electrode and a secondary battery characteristically excellent in suppressing change in ion concentration in an electrolyte solution, wherein the positive electrode of a cation migration type is provided by including the electrically conductive polymer (a) and at least one of the polyanionic acid and the metal salt thereof (b) as the positive electrode material. Herein, at least one of the polyanionic acid and the metal salt thereof (b) plays a role of supplying anions in order to compensate positive electric charge generated during a charging reaction of the positive electrode. That is, at least one of the polyanionic acid and the metal salt thereof (b) acts as a fixed dopant. Furthermore, the component (b) is also capable of functioning as a binder to form the positive electrode by utilizing properties as a polymer. An adhesiveness to a current collector or an electrically conductive polymer (a) and a followability to an electrode when bending are properties required for a binder to form a positive electrode.

The present inventors, therefore, found that a positive electrode excellent in peeling resistance and bending durability can be provided by including the electrically conductive polymer (a), at least one of the polyanionic acid and the metal salt thereof (b), and the plasticizer (c) as the positive electrode materials for the nonaqueous electrolyte secondary battery. Besides, the inventors found that the nonaqueous electrolyte secondary battery with this positive electrode has an excellent weight energy density and low dependency on electrolyte solution amount. That is, it means that no other binder material is required and consequently leads to an improvement in a capacity density of the entire positive electrode.

In this manner, the present invention provides a positive electrode of a nonaqueous electrolyte secondary battery comprising an electrically conductive polymer (a), at least one of a polyanionic acid and a metal salt thereof (b), and a plasticizer (c), wherein the nonaqueous electrolyte secondary battery includes a positive electrode, a negative electrode, a separator disposed between the positive electrode and the negative electrode, and an electrolyte solution having ionic conductivity. Accordingly, it is possible to provide a positive electrode having excellent peeling resistance and bending durability. Furthermore, a nonaqueous electrolyte secondary battery using this inventive positive electrode has an excellent weight energy density and can suppress change in electrolyte ion concentration during a charge/discharge reaction.

Particularly, where the electrically conductive polymer (a) is at least one of polyaniline and polyaniline derivative, a further improvement of battery performance such as a weight energy density is achieved.

Where the plasticizer (c) is at least one of polyoxyalkylene and derivatives thereof, the plasticizer works highly effectively, and therefore, greatly improves the resulting positive electrode in adhesiveness and followability to bending. Moreover, where the plasticizer (c) is at least one of polypropylene glycol and derivatives thereof, the positive electrode is further superior in adhesiveness and followability.

Where the plasticizer (c) has a molecular weight of 90 to 2000, the plasticizer works highly effectively, and therefore, the resulting positive electrode further enhances the effect in adhesiveness and followability to bending.

Where a proportion of the plasticizer (c) contained in the positive electrode is 0.2 to 15% by weight, the effect as a plasticizer is highly achieved, and therefore, the resulting positive electrode becomes highly excellent in adhesiveness and followability to bending.

Where the aforementioned polyanionic acid (b) is at least one selected from the group consisting of polyacrylic acid, polymethacrylic acid, polyvinylbenzoic acid, polyallylbenzoic acid, polymethallylbenzoic acid, polymaleic acid, polyfumaric acid and polyglutamic acid, a further improvement of the weight energy density is achieved.

In the method for manufacturing a nonaqueous electrolyte secondary battery including the following steps (I) to (III):
(I) a step of preparing a positive electrode and a negative electrode, and disposing a separator between the positive electrode and the negative electrode to produce a stacked component including the positive electrode, the separator and the negative electrode;
(II) a step of housing at least one of the stacked component in a battery container; and
(III) a step of pouring an electrolyte solution into the battery container, wherein the positive electrode contains an electrically conductive polymer (a), at least one of a polyanionic acid and a metal salt thereof (b), and a plasticizer (c), and wherein the negative electrode contains a base metal or a material capable of a base metal ion insertion/extraction. Accordingly, it is possible to provide a nonaqueous electrolyte secondary battery which has an excellent weight energy density and low dependency on electrolyte solution amount, as well as an excellent volume energy density.

### DESCRIPTION OF EMBODIMENTS

An embodiment of the present invention will hereinafter be described in detail, but the following description is an example of an embodiment of the present invention and the present invention is not limited to the following description.

The positive electrode of the present invention is used in a nonaqueous electrolyte secondary battery and comprises an electrically conductive polymer (a), at least one of a polyanionic acid and a metal salt thereof (b), and a plasticizer (c). The nonaqueous electrolyte secondary battery includes a positive electrode, a negative electrode, a separator disposed between the positive electrode and the negative electrode, and an electrolyte solution having ionic conductivity. The aforementioned members, materials to be used, and the like will hereinafter be successively described.

### <Positive Electrode>

### [Electrically Conductive Polymer (a)]

As described above, the positive electrode for a nonaqueous electrolyte secondary battery of the present invention contains an electrically conductive polymer. The electrically conductive polymer in the present invention is herein defined as any polymer that has an electrical conductivity variable due to insertion or extraction of ion species with respect to the polymer in order to compensate for change in electric charge generated or removed by an oxidation reaction or a reduction reaction occurring in a main chain of the polymer.

The polymer has a higher electrical conductivity in a doped state, and has a lower electrical conductivity in a dedoped state. Even if the electrically conductive polymer loses its electrical conductivity due to the oxidation reaction or the reduction reaction to be thereby electrically insulative (in the dedoped state), the polymer can reversibly have an electrical conductivity again due to the oxidation/reduction reaction. Therefore, in the present invention, the electrically insulative polymer in the dedoped state is also classified into the category of the electrically conductive polymer.

A preferred example of the electrically conductive polymer of the present invention is a polymer containing a dopant of a protonic acid anion selected from the group consisting of inorganic acid anions, aliphatic sulfonate anions, aromatic sulfonate anions, polymeric sulfonate anions and polyvinyl sulfate anions. Another preferred example of the electrically conductive polymer in the present invention is a polymer obtained in the dedoped state by dedoping the electrically conductive polymer described above.

Specific examples of the electrically conductive polymer include polyacetylene, polypyrrole, polyaniline, polythiophene, polyfuran, polyselenophene, polyisothianaphthene, polyphenylene sulfide, polyphenylene oxide, polyazulene, poly(3,4-ethylenedioxythiophene) and various derivatives thereof. Particularly, polyaniline or polyaniline derivative each having a higher electrochemical capacity is preferably used.

In the present invention, polyaniline described above refers to a polymer prepared by electrochemical polymerization or chemical oxidative polymerization of aniline, and the polyaniline derivative refers to polymers prepared, for example, by electrochemical polymerization or chemical oxidative polymerization of aniline derivatives.

Examples of the aniline derivatives include aniline derivatives prepared by substituting aniline at positions other than the 4-position thereof with at least one substituent selected from alkyl groups, alkenyl groups, alkoxy groups, aryl groups, aryloxy groups, alkylaryl groups, arylalkyl groups and alkoxyalkyl groups. Preferred specific examples of the aniline derivatives include o-substituted anilines such as o-methylaniline, o-ethylaniline, o-phenylaniline, o-methoxyaniline and o-ethoxyaniline, and m-substituted anilines such as m-methylaniline, m-ethylaniline, m-methoxyaniline, methoxyaniline and m-phenylaniline, which may be used either alone or in combination. In the present invention, though, having a substituent at the 4-position, p-phenylaminoaniline is advantageously used as the aniline derivative because polyaniline can be provided by the oxidative polymerization of p-phenylaminoaniline.

In the present invention, "aniline or the aniline derivative" may be referred to simply as "aniline", and "at least one of the polyaniline and the polyaniline derivative" may be referred to simply as "polyaniline". Accordingly, even if a polymer for the electrically conductive polymer is prepared from an aniline derivative, the resulting polymer may be referred to as "electrically conductive polyaniline".

[At Least One of Polyanionic Acid and Metal Salt Thereof (b)]

In the present invention, the polyanionic acid refers to a polymer having an anionic group. The polyanionic acid is preferably a polycarboxylic acid which is a polymer having a carboxyl group in a molecule. As the polycarboxylic acid, for example, polyacrylic acid, polymethacrylic acid, polyvinylbenzoic acid, polyallylbenzoic acid, polymethallylbenzoic acid, polymaleic acid, polyfumaric acid, polyasparaginic acid and polyglutamic acid are preferably used, among which polyacrylic acid and polymethacrylic acid are more preferably used. These polycarboxylic acids may be used either alone or in combination.

The metal salt of a polycarboxylic acid refers to, for example, an alkali metal salt or an alkaline-earth metal salt, and these metal salts may be used either alone or in combination. The alkali metal salt is preferably a lithium salt or a sodium salt, and the alkaline-earth metal salt is preferably a magnesium salt or a calcium salt.

At least one of the polyanionic acid and the metal salt thereof (b) is generally used in an amount of 1 to 100 parts by weight, and preferably 20 to 55 parts by weight, based on 100 parts by weight of the electrically conductive polymer (a). If the amount of at least one of the polyanionic acid and the metal salt thereof (b) is excessively small with respect to the electrically conductive polymer (a), it will be impossible to obtain a nonaqueous electrolyte secondary battery having an excellent weight energy density. Whereas, if the amount of at least one of the polyanionic acid and the metal salt thereof (b) is excessively great with respect to the electrically conductive polymer (a), the relative amount of non-active materials is increased, causing the total weight gain of the battery and making it impossible to provide a nonaquesous electrolyte secondary battery having a high energy density.

### [Plasticizer (c)]

In the present invention, the plasticizer (c) refers to a material which has compatibility with at least one of the polyanionic acid and the metal salt thereof (b) and is capable of imparting flexibility. In the present invention, as the plasticizer, for example, glycerin, polyglycerin, glycerin derivatives, polyglycerin derivatives, polyethylene glycol, polyethylene glycol derivatives, polypropylene glycol, polypropylene glycol derivatives, phthalic acid esters, adipic acid esters, trimellitic acid esters, citric acid esters, terephthalic acid esters and benzoic acid esters are preferably used. Particularly, polyoxyalkylene and derivatives thereof are more preferably used. Polypropylene glycol and derivatives thereof are further preferably used.

In the present invention, the plasticizer (c) preferably has a molecular weight of 90 to 2000. If the molecular weight is excessively low, since the plasticizer most likely volatilizes in forming an electrode, it will be impossible to exert its effect as a plasticizer. Whereas, if the molecular weight is excessively high, since the compatibility of the plasticizer with at least one of the polyanionic acid and the metal salt thereof (b) is reduced, it will be similarly impossible to exert its effect as a plasticizer.

The proportion of the plasticizer (c) contained in the positive electrode is preferably 0.2 to 15% by weight. The reason for this is that if the amount of the plasticizer (c) to be contained is excessively large, a component not involved in the charge/discharge reaction is increased as a result, which undesirably causes a reduction of energy density, whereas, if the amount of the plasticizer (c) to be contained is excessively small, it will be impossible to obtain adequate adhesiveness and followability to bending of the resulting positive electrode.

As required, a conductive agent and the like can be mixed together with the aforementioned components (a) to (c) as materials for forming the positive electrode.

The conductive agent is desirably an electrically conductive material which has a higher electrical conductivity, is effective for reducing the electrical resistance between the active materials of the battery and is free from change in its properties due to application of a potential in battery discharge. Examples of the conductive agent include electrically conductive carbon materials and metal materials, among which electrically conductive carbon blacks, such as acetylene black and Ketjen black, and fibrous carbon materials, such as carbon fibers, carbon nanotubes and carbon nanofibers, are preferably used. Particularly preferred materials are electrically conductive carbon blacks.

The amount of the conductive agent is preferably 1 to 30 parts by weight, more preferably 4 to 20 parts by weight, and particularly preferably 8 to 18 parts by weight, based on 100 parts by weight of the electrically conductive polymer (a). If the amount of the conductive agent to be blended falls within this range, the positive electrode can be prepared without having abnormality of the shape or characteristics of the active material, and rate characteristics can be effectively improved.

### [Outer Shape of Positive Electrode]

The positive electrode according to the nonaqueous electrolyte secondary battery of the present invention comprises a composite product containing at least the aforementioned components (a) to (c), and preferably formed in a porous sheet. In general, the positive electrode has a thickness of preferably 1 to 500 µm, more preferably 10 to 300 µm.

The thickness of the positive electrode is measured by means of a dial gage (available from Ozaki Mfg. Co., Ltd.) which is a flat plate including a distal portion having a diameter of 5 mm. The measurement is performed at ten points on a surface of the electrode, and the measurement values are averaged. Where the positive electrode (porous layer) is provided on a current collector to be combined with the current collector, the thickness of the combined product is measured in the aforementioned manner, and the measurement values are averaged. Then, the thickness of the positive electrode is determined by subtracting the thickness of the current collector from the average thickness of the combined product.

### [Production of Positive Electrode]

The positive electrode according to the nonaqueous electrolyte secondary battery of the present invention is produced, for example, in the following manner. For example, the aforementioned component (a) is dissolved or dispersed in water, and the electrically conductive polymer powder and, as required, a conductive agent, such as electrically conductive carbon black, are added to and sufficiently dispersed in the resulting solution or dispersion to prepare a paste having a solution viscosity of about 0.1 to about 50 Pa·s. The paste is applied on a current collector, and then water is vaporized from the paste, whereby a positive electrode can be provided as a composite product (porous sheet) having a positive electrode active material-containing layer comprising the components (a) to (c), and the conductive agent as required, on the current collector.

### <Negative Electrode>

The negative electrode according to the nonaqueous electrolyte secondary battery of the present invention is produced from a negative electrode active material, which is a base metal or a material capable of a base metal ion insertion/extraction in oxidation and reduction. Examples of the base metal may include alkali metals, such as metal lithium, metal sodium and metal potassium, and alkaline-earth metals, such as metal magnesium and metal calcium. Examples of the base metal ion include ions of the aforementioned base metals.

In the present invention, a preferred nonaqueous electrolyte secondary battery is a lithium secondary battery, and accordingly, an example of a preferred base metal may include lithium, and an example of preferred base metal ions may include lithium ions. As the material capable of base metal ion insertion/extraction, a carbon material is preferably used, and specific examples thereof include a calcined product of coke, pitch, phenolic resins, polyimides and cellulose; artificial graphite; and natural graphite. Beside the carbon materials, silicon, tin or the like can be also used. In the present invention, the term "use" is intended to include, in addition to the case where a single forming material is used, the case where a main forming material is used in combination with other forming materials, and the proportion of other forming materials is generally set to less than 50 wt% of the main forming material.

### <Electrolyte Solution>

In the nonaqueous electrolyte secondary battery of the present invention, the electrolyte solution is formed of a material containing an electrolyte salt and a solvent. As the electrolyte salt, for example, lithium hexafluorophosphate, lithium tetrafluoroborate, lithium perchlorate or the like is suitably used.

Examples of the solvent used in the electrolyte solution include nonaqueous solvents, i.e., organic solvents, such as carbonates, nitriles, amides and ethers. Specific examples of the organic solvents may include ethylene carbonate, propylene carbonate, butylene carbonate, dimethyl carbonate, diethyl carbonate, ethyl methyl carbonate, acetonitrile, propionitrile, N,N'-dimethylacetamide, N-methyl-2-pyrrolidone, dimethoxyethane, diethoxyethane and γ-butyrolactone, which may be used either alone or in combination.

When a separator is used in the nonaqueous electrolyte secondary battery of the present invention, the separator may be an insulative porous sheet, which is capable of preventing an electrical short circuit between the positive electrode and the negative electrode disposed in opposed relation with the separator interposed therebetween; is electrochemically stable; and has a higher ionic permeability and a certain mechanical strength. Therefore, for example, paper, nonwoven fabric and porous films made of a resin, such as polypropylene, polyethylene or polyimide, are preferably used, and these materials may be used either alone or in combination.

A current collector can be used in the nonaqueous electrolyte secondary battery of the present invention in addition to the positive electrode, the negative electrode and the electrolyte solution. The current collector is not particularly limited as long as it has good electrical conductivity and is stable. Metal foils and meshes, such as of nickel, aluminum, stainless steel and copper, are preferably used, and a material made of stainless steel is more preferably used. If the negative electrode is made of metal, the negative electrode itself may also serve as a current collector.

### <Method for Manufacturing Nonaqueous Electrolyte Secondary Battery>

A method for manufacturing the nonaqueous electrolyte secondary battery of the present invention using the aforementioned materials includes the following steps (I) to (III). The manufacturing method will hereinafter be described in detail.
(I) A step of preparing a positive electrode and a negative electrode, and disposing a separator between the positive electrode and the negative electrode to produce a stacked component including the positive electrode, the separator and the negative electrode.
(II) A step of housing at least one of the stacked component in a battery container.
(III) A step of pouring an electrolyte solution into the battery container.

Specifically, the positive electrode, the separator and the negative electrode are stacked with the separator interposed between the positive and negative electrodes, whereby a stacked component is prepared. Then, the stacked component is housed in a battery container, such as an aluminum laminate package, and dried in vacuum. Then, an electrolyte solution is poured into the vacuum dried battery container. Finally, the package serving as a battery container is sealed, whereby the nonaqueous electrolyte secondary battery of the present invention is completed.

### <Nonaqueous Electrolyte Secondary Battery>

Besides the laminate cell, the nonaqueous electrolyte secondary battery of the present invention may be shaped in various forms, such as a film form, a sheet form, a square form, a cylindrical form and a button form.

In the positive electrode of the nonaqueous electrolyte secondary battery of the present invention, at least one of the polyanionic acid and the metal salt thereof (b) is formed together with another material for forming a positive electrode, whereby the component (b) is stationarily fixed in the positive electrode. Accordingly, due to a cation movement relative to an anion of the component (b), a nonaqueous electrolyte secondary battery using the positive electrode will have a rocking chair-type mechanism. Therefore, the nonaqueous electrolyte secondary battery using the positive electrode can exert a sufficient weight energy density even when the amount of the electrolyte solution is small, and can be said to be a nonaqueous electrolyte secondary battery having low dependency on electrolyte solution amount.

The nonaqueous electrolyte secondary battery of the present invention, like an electric double layer capacitor, has a higher weight power density and excellent cycle characteristics. The nonaqueous electrolyte secondary battery has a significantly higher weight energy density than the conventional electric double layer capacitor.

### EXAMPLES

Inventive examples will hereinafter be described in conjunction with comparative examples. However, the present invention is not limited to these examples without departing from the aspect of the invention.

First, the following materials and constituent members were prepared and produced before the production of nonaqueous electrolyte secondary batteries according to the inventive examples and the comparative examples.

### [Preparation of Electrically Conductive Polymer]

As the electrically conductive polymer, powder of an electrically conductive polyaniline containing tetrafluoroboric acid as a dopant was prepared in the following manner.

That is, first, 84.0 g (0.402 mol) of a tetrafluoroboric acid aqueous solution (special grade reagent available from Wako Pure Chemical Industries, Ltd.) having a concentration of 42 wt% was added to 138 g of ion-exchanged water contained in a 300-mL volume glass beaker. Then, 10.0 g (0.107 mol) of aniline was added to the resulting solution, while the solution was stirred by a magnetic stirrer. Immediately after the addition of aniline to the tetrafluoroboric acid aqueous solution, aniline was dispersed in an oily droplet form in the tetrafluoroboric acid aqueous solution, and then dissolved in water in several minutes to provide a homogeneous transparent aniline aqueous solution. The aniline aqueous solution thus provided was cooled to -4°C or lower with the use of a refrigerant bath.

Then, 11.63 g (0.134 mol) of a powdery manganese dioxide as an oxidizing agent (Grade-1 reagent available from Wako Pure Chemical Industries, Ltd.) was added little by little to the aniline aqueous solution, while the mixture in the beaker was kept at a temperature of not higher than -1°C. Immediately after the oxidizing agent was thus added to the aniline aqueous solution, the color of the aniline aqueous solution turned dark green. Thereafter, the solution was continuously stirred, whereby generation of a dark green solid began.

After the oxidizing agent was added in 80 minutes in this manner, the resulting reaction mixture containing the reaction product thus generated was cooled, and further stirred for 100 minutes. Thereafter, the resulting solid was suction-filtered through No. 2 filter paper (available from ADVANTEC Corporation) with the use of a Buchner funnel and a suction bottle to provide powder. The powder was washed in an about 2 mol/L tetrafluoroboric acid aqueous solution with stirring by means of the magnetic stirrer, then washed in acetone several times with stirring, and filtrated under reduced pressure. The resulting powder was dried in vacuum at a room temperature (25°C) for 10 hours. Thus, 12.5 g of an electrically conductive polyaniline containing tetrafluoroboric acid as a dopant was provided, which was bright green powder.

### (Electrical Conductivity of Electrically Conductive Polyaniline Powder)

After 130 mg of the electrically conductive polyaniline powder was milled in an agate mortar, the resulting powder was compacted into an electrically conductive polyaniline disk having a diameter of 13 mm and a thickness of 720 µm in vacuum at a pressure of 75 MPa for 10 minutes by means of a KBr tablet forming machine for infrared spectrum measurement. The disk had an electrical conductivity of 19.5 S/cm measured by the Van der Pauw method using the four-point probe.

### (Preparation of Polyaniline Powder in Dedoped State)

The electrically conductive polyaniline powder provided in the doped state in the aforementioned manner was put in a 2 mol/L sodium hydroxide aqueous solution, and stirred in a 3-L separable flask for 30 minutes. Thus, the electrically conductive polyaniline powder doped with the tetrafluoroboric acid was dedoped through a neutralization reaction. The dedoped polyaniline was washed with water until the filtrate became neutral. Then, the dedoped polyaniline was washed in acetone with stirring, and filtered under reduced pressure through No. 2 filter paper with the use of a Buchner funnel and a suction bottle. Thus, dedoped polyaniline powder was provided on the No. 2 filter paper. The resulting powder was dried in vacuum at a room temperature for 10 hours, whereby brown polyaniline powder in the dedoped state was provided.

### (Preparation of Polyaniline Powder in Reduced-Dedoped State)

Next, the polyaniline powder in the dedoped state was put in an aqueous solution of phenylhydrazine in methanol, and reduced for 30 minutes with stirring. Due to the reduction, the color of the polyaniline powder turned from brown to gray. After the reaction, the resulting polyaniline powder was washed with methanol and then with acetone, filtered, and dried in vacuum at a room temperature. Thus, polyaniline in a reduced-dedoped state was provided.

### (Electrical Conductivity of Polyaniline Powder in Reduced-Dedoped State)

After 130 mg of the polyaniline powder in the reduced-dedoped state was milled in an agate mortar, the resulting powder was compacted into a polyaniline disk in a reduced-dedoped state having a thickness of 720 µm in vacuum at a pressure of 75 MPa for 10 minutes by means of a KBr tablet forming machine for infrared spectrum measurement. The disk had an electrical conductivity of 5.8 × 10⁻³ S/cm measured by the Van der Pauw method using the four-point probe. This means that the polyaniline compound was an active material compound having an electrical conductivity variable due to ion insertion/extraction.

### [Preparation of At Least One of Polyanionic Acid and Metal Salt Thereof (b)]

As at least one of the polyanionic acid and the metal salt thereof (b), an aqueous solution of lithium salt of polyacrylic acid was prepared in the following manner.

To 175.38 g of ion-exchanged water, 18.48 g of polyacrylic acid (AQUALIC AS58 available from NIPPON SHOKUBAI CO., LTD., and having a weight average molecular weight of 800,000) was added, and the resulting mixture was left on overnight to be swelled. Thereafter, the swollen mixture was ultrasonically treated for 1 minute by means of an ultrasonic homogenizer to be dissolved, whereby 193.86 g of a uniform and viscous polyacrylic acid aqueous solution was provided. Then, 6.14 g of lithium hydroxide powder, which is equivalent to an amount required for converting whole of carboxyl group portions of polyacrylic acid to lithium salt, was added to 193.86 g of the resulting polyacrylic acid aqueous solution to prepare 200 g of an aqueous solution of lithium salt of polyacrylic acid (concentration 10 wt%). To the aqueous solution, ion-exchanged water was further added to adjust its concentration to a desired concentration for use.

### [Example 1]

### (Production of Positive Electrode Containing Polyanionic Acid and Plasticizer with Use of Polyaniline Powder)

After 4.69 g of the polyaniline powder in the reduced-dedoped state and 0.60 g of electrically conductive carbon black (DENKA BLACK available from Denki Kagaku Kogyo K.K.) powder were mixed, the mixture was added to 26.77 g of the aqueous solution of lithium salt of polyacrylic acid having a concentration adjusted to 4.20 wt%, and the resulting mixture was adequately kneaded by a spatula. After 0.33 g of a 20 wt% aqueous solution of glycerin (available from Wako Pure Chemical Industries, Ltd., having an average molecular weight of 92) was added thereto as a plasticizer, the resulting mixture was ultrasonically treated for 1 minute by an ultrasonic homogenizer, and then the mixture was subjected to mild dispersion by applying a high shear force with the use of a thin-film spin system high-speed mixer (FILMIX MODEL 40-40 available from Primix Corporation) to provide a fluid paste. The paste was defoamed by means of a vacuum suction bell jar and a rotary pump.

The defoamed paste was applied at a coating rate of 10 mm/sec onto an etched aluminum foil for an electric double layer capacitor (30CB available from Hohsen Corporation) with the use of a desktop automatic coater (available from Tester Sangyo Co., Ltd.) while the coating thickness was adjusted to 360 µm by a doctor blade applicator equipped with a micrometer. Then, the resulting coating was left standing at a room temperature (25°C) for 45 minutes, and dried on a hot plate at a temperature of 100°C to produce a polyaniline sheet electrode (Example 1) containing a polycarboxylic acid. This electrode contains glycerin in an amount of 1% with respect to an electrode material weight not containing a current collector.

### [Examples 2 to 19]

### (Production of Positive Electrode Containing Polyanionic Acid and Various Kinds and Amounts of Plasticizer with Use of Polyaniline Powder)

Positive electrodes of Examples 2 to 19 were produced in the same manner as in the production of the positive electrode of Example 1 except for changing the amount of each material to a value shown in Table 1 below.

**[Table 1]**

| | Electrically Conductive Polymer | Conductive Agent | Dopant also Serving as Binder | | | Plasticizer | | |
|---|---|---|---|---|---|---|---|---|
| | Polyaniline | DENKA BLACK | Lithium Polyacrylate | | | | | |
| | g | g | Mw | wt% | g | Kind | wt% | g |
| Example 1 | 4.69 | 0.60 | 800,000 | 4.20 | 26.77 | glycerin | 20 | 0.33 |
| Example 2 | 4.55 | 0.61 | 800,000 | 4.18 | 26.11 | glycerin | 20 | 1.69 |
| Example 3 | 4.69 | 0.60 | 800,000 | 4.20 | 26.77 | PEG400 | 20 | 0.33 |
| Example 4 | 4.30 | 0.55 | 800,000 | 4.20 | 24.54 | M-400 | 20 | 0.31 |
| Example 5 | 4.69 | 0.60 | 800,000 | 4.20 | 26.77 | M-550 | 20 | 0.33 |
| Example 6 | 4.69 | 0.60 | 800,000 | 4.20 | 26.77 | MM-500 | 20 | 0.33 |
| Example 7 | 4.69 | 0.60 | 800,000 | 4.20 | 26.77 | DA-700 | 20 | 0.33 |
| Example 8 | 3.94 | 0.50 | 800,000 | 4.29 | 22.05 | P400 | 2 | 0.49 |
| Example 9 | 4.71 | 0.60 | 800,000 | 4.20 | 26.90 | P400 | 20 | 0.17 |
| Example 10 | 4.69 | 0.60 | 800,000 | 4.20 | 26.77 | P400 | 20 | 0.33 |
| Example 11 | 4.85 | 0.65 | 800,000 | 4.18 | 27.83 | P400 | 20 | 3.33 |
| Example 12 | 4.02 | 0.60 | 800,000 | 6.35 | 27.10 | P400 | 20 | 0.17 |
| Example 13 | 4.00 | 0.60 | 800,000 | 6.35 | 26.96 | P400 | 20 | 0.33 |
| Example 14 | 3.82 | 0.60 | 800,000 | 6.76 | 24.20 | P400 | 20 | 3.33 |
| Example 15 | 4.69 | 0.60 | 800,000 | 4.20 | 26.77 | PPG300(t) | 20 | 0.33 |
| Example 16 | 4.69 | 0.60 | 800,000 | 4.25 | 26.43 | MP-70 | 10 | 0.67 |
| Example 17 | 4.69 | 0.60 | 800,000 | 4.20 | 26.77 | SP-750 | 20 | 0.33 |
| Example 18 | 4.69 | 0.60 | 800,000 | 4.20 | 26.77 | #104 | 20 | 0.33 |
| Example 19 | 4.69 | 0.60 | 800,000 | 4.20 | 26.77 | 50DE-25 | 20 | 0.33 |

The details of the plasticizers used in Table 1 above are shown in Table 2 below.

**[Table 2]**

| Abbreviation | Trade Name | Classification | Manufacturer | Average Molecular Weight |
|---|---|---|---|---|
| glycerin | Reagent | glycerin | Wako Pure Chemical Industries, Ltd. | 92 |
| PEG400 | Reagent | polyethylene glycol (PEG) | Wako Pure Chemical Industries, Ltd. | 400 |
| M-400 | UNIOX M-400 | PEG derivative | NOF CORPORATION | 400 |
| M-550 | UNIOX M-550 | PEG derivative | NOF CORPORATION | 550 |
| MM-500 | UNIOX MM-500 | PEG derivative | NOF CORPORATION | 550 |
| DA-700 | UNIOL DA-700 | PEG derivative | NOF CORPORATION | 660 |
| P400 | P-400 | polypropylene glycol (PPG) | ADEKA CORPORATION | 400 |
| PPG300(t) | Reagent | PPG derivative | Wako Pure Chemical Industries, Ltd. | 300 |
| MP-70 | SMACK MP-70 | PPG derivative | Kao Corporation | 400 |
| SP-750 | SANNIX SP-750 | PPG derivative | Sanyo Chemical Industries, Ltd. | 700 |
| #104 | PLONON 104 | PEG-PPG block copolymer | NOF CORPORATION | 1670 |
| 50DE-25 | UNILUBE 50DE-25 | PEG-PPG random copolymer | NOF CORPORATION | 1750 |

### [Comparative Example 1]

### (Preparation of Positive Electrode Containing Polyanionic Acid with Use of Polyaniline Powder)

After 8.69 g of the polyaniline powder in the reduced-dedoped state and 1.10 g of electrically conductive carbon black (DENKA BLACK available from Denki Kagaku Kogyo K.K.) powder were mixed, the mixture was added to 20.92 g of the aqueous solution of lithium salt of polyacrylic acid having a concentration adjusted to 9.95 wt%, and the resulting mixture was adequately kneaded by a spatula. Further, 12 g of ion-exchanged water was added thereto. The kneaded mixture was ultrasonically treated for 1 minute by an ultrasonic homogenizer, and then the mixture was subjected to mild dispersion by applying a high shear force with the use of a thin-film spin system high-speed mixer (FILMIX MODEL 40-40 available from Primix Corporation) to provide a fluid paste. The paste was defoamed by means of a vacuum suction bell jar and a rotary pump.

The defoamed paste was applied at a coating rate of 10 mm/sec onto an etched aluminum foil for an electric double layer capacitor (30CB available from Hohsen Corporation) with the use of a desktop automatic coater (available from Tester Sangyo Co., Ltd.) while the coating thickness was adjusted to 360 µm by a doctor blade applicator equipped with a micrometer. Then, the resulting coating was left standing at a room temperature (25°C) for 45 minutes, and dried on a hot plate at a temperature of 100°C to produce a polyaniline sheet electrode (Comparative Example 1) containing a polycarboxylic acid.

A simple peeling test and a bending test were performed according to the following criterion on each of the positive electrodes of Examples 1 to 19 and Comparative Example 1 thus obtained. The test results are shown together in Table 3 below.

### <<Simple Peeling Test>>

In order to evaluate the adhesiveness of the electrode to the current collector, a simple peeling test was performed under the following conditions. In the test, a pressure-sensitive adhesive tape was bonded to the surface of a positive electrode layer (active material-containing layer) of the electrode, the tape was peeled off in such a manner that an angle formed between the direction the tape is pulled and the current collector was about 180°, and a state of the positive electrode layer remaining on the current collector was visually checked. The electrode in which the positive electrode layer was fully peeled off was rated as "x"; the electrode in which the positive electrode layer partially adhered to the current collector was rated as "Δ"; the electrode, in which the positive electrode layer adhered to 50% or more of the current collector and less than 50% of the current collector was exposed, was rated as "○"; and the electrode, in which the current collector was not almost exposed, was rated as "⊙".

### <<Bending Test>>

In order to investigate the followability of the electrode to bending, a bending test was performed under the following conditions. In the test, the positive electrode sheet was cut into a size of 150 mm × 80 mm, a weight of 30 g was attached to both end sides of the positive electrode sheet, the positive electrode sheet was placed along a cylinder having a diameter of 35 mm in such a manner that the coated positive electrode layer (active material-containing layer) faced outward, and the followability of the positive electrode sheet to the cylinder was evaluated. The positive electrode sheet that does not completely follow the cylinder shape or which caused cracks in electrode, was rated as "Δ"; and the positive electrode sheet that completely followed the cylinder shape was rated as "O".

**[Table 3]**

| | Kind of Plasticizer | Composition Ratio (Each Component/Total Solid Content) | | | | Simple Peeling Test | Bending Test |
|---|---|---|---|---|---|---|---|
| | | Electrically Conductive Polymer | Conductive Agent | Dopant also Serving as Binder | Plasticizer | | |
| Example 1 | glycerin | 72.4% | 9.3% | 17.4% | 1.0% | Δ | Δ |
| Example 2 | glycerin | 69.1% | 9.3% | 16.6% | 5.1% | Δ | Δ |
| Example 3 | PEG400 | 72.4% | 9.3% | 17.4% | 1.0% | Δ | ○ |
| Example 4 | M-400 | 72.4% | 9.3% | 17.3% | 1.0% | Δ | ○ |
| Example 5 | M-550 | 72.4% | 9.3% | 17.4% | 1.0% | Δ | ○ |
| Example 6 | MM-500 | 72.4% | 9.3% | 17.4% | 1.0% | Δ | ○ |
| Example 7 | DA-700 | 72.4% | 9.3% | 17.4% | 1.0% | Δ | ○ |
| Example 8 | P400 | 73.0% | 9.3% | 17.5% | 0.2% | Δ | ○ |
| Example 9 | P400 | 72.8% | 9.3% | 17.5% | 0.5% | Δ | ○ |
| Example 10 | P400 | 72.4% | 9.3% | 17.4% | 1.0% | ○ | ○ |
| Example 11 | P400 | 66.2% | 8.9% | 15.9% | 9.1% | ⊙ | ○ |
| Example 12 | P400 | 63.1% | 9.4% | 27.0% | 0.5% | ⊙ | ○ |
| Example 13 | P400 | 62.7% | 9.4% | 26.8% | 1.0% | ⊙ | ○ |
| Example 14 | P400 | 56.8% | 8.9% | 24.3% | 9.9% | ⊙ | ○ |
| Example 15 | PPG300(t) | 72.4% | 9.3% | 17.4% | 1.0% | ○ | ○ |
| Example 16 | MP-70 | 72.4% | 9.3% | 17.3% | 1.0% | ○ | ○ |
| Example 17 | SP-750 | 72.4% | 9.3% | 17.4% | 1.0% | ○ | ○ |
| Example 18 | #104 | 72.4% | 9.3% | 17.4% | 1.0% | ○ | ○ |
| Example 19 | 50DE-25 | 72.4% | 9.3% | 17.4% | 1.0% | ○ | ○ |
| Comparative Example 1 | none | 73.2% | 9.3% | 17.5% | 0.0% | × | incapable of test |

From Table 3 described above, it was found that in the positive electrodes of Examples 1 to 19 each containing the plasticizer, peeling resistance was significantly improved and bending durability was also excellent as compared with Comparative Example 1 not containing the plasticizer. The positive electrodes of Examples 3 to 19 each containing a polyoxyalkylene compound were found to have superiority in bending durability in addition to peeling resistance. The positive electrodes of Examples 8 to 19 each containing polypropylene glycol and polypropylene glycol derivatives tend to exhibit more improved peeling resistance. The reason why the evaluations of Example 8 and 9 remain in a rating of a symbol Δ is because the proportion of the plasticizer is slightly low.

### <Production of Laminate Cell>

Using the positive electrodes of Examples 10 and 13 subjected to the bending test in the aforementioned manner, each of the positive electrodes was cut into a size of 35 mm × 27 mm, and a part of an active material layer of the positive electrode sheet was removed so that the active material layer had an area of 27 mm × 27 mm to produce a positive electrode sheet having a portion of the sheet, from which the part of the active material layer had been removed, as a location for attachment of a tab electrode for current extraction.

As a negative electrode, metal lithium (available from Honjo Metal Co., Ltd., and having a thickness of 50 µm) was press-bonded to a stainless steel mesh for use, and the size of a negative electrode active material layer was set to 29 mm × 29 mm, which was greater than that of the positive electrode sheet.

As a separator, a nonwoven fabric (TF40-50 available from NIPPON KODOSHI CORPORATION, having a thickness of 50 µm and a porosity of 70%) was used.

The positive electrode sheet was dried in vacuum at 80°C for 2 hours in a vacuum dryer. The separator was dried in vacuum at 100°C for 5 hours.

Next, a stacked component was assembled by employing the positive electrode, the negative electrode and the separator in a glove box in which the dew point of the atmosphere was -90°C. Specifically, the positive electrode, the separator and the negative electrode are stacked with three sheets of nonwoven fabric separators interposed between the positive and negative electrodes, whereby the stacked component is prepared. After the stacked component was housed in an aluminum laminate package, a periphery of the package was sealed by a laminator with one location of the periphery being left as an opening, and an electrolyte solution was poured in the package through the opening. A solution, which was formed by dissolving LiPF₆ in a concentration of 1 mol/L in a solvent containing ethylene carbonate and dimethyl carbonate at a volume ratio of 1 : 1, was used as the electrolyte solution. Finally, the package was sealed, whereby nonaqueous electrolyte secondary batteries of Examples 20 and 21 were provided.

A weight energy density was measured according to the following criterion on each of the nonaqueous electrolyte secondary batteries of Examples 20 and 21 thus obtained.

### «Measurement of Weight Energy Density»

With respect to the characteristics of the nonaqueous electrolyte secondary batteries thus assembled, the cells were each allowed to stand still in a thermostat chamber kept at 25°C. By means of a battery charge/discharge device (TOSCAT available from TOYO SYSTEM CO., LTD.), measurement was performed in a constant current and constant voltage charge/constant current discharge mode. A charge process was performed at a constant current corresponding 0.05C until the voltage reached 3.8 V, and after the voltage reached 3.8 V, the charge process was performed at a constant voltage of 3.8 V until the current value decayed to 20% of a current value corresponding 0.05C. This charge process was defined as one charge process. Then, a discharge process was performed at a current value corresponding 0.05C until the voltage reached 2.0 V, and these processes were collectively defined as a charge/discharge cycle with a charge upper limit of 3.8 V. Herein, 0.05C indicates a 20 hour rate, and the term "20 hour rate" means a current value at which it takes 20 hours to charge or discharge a battery.

This charge/discharge cycle with a charge upper limit of 3.8 V was repeated five times to activate the cells.

Then, a charge process was performed at a constant current corresponding 0.05C until the voltage reached 4.2 V, and after the voltage reached 4.2 V, the charge process was performed at a constant voltage of 4.2 V until the current value decayed to 20% of a current value corresponding 0.05C. This charge process was defined as one charge process. Then, a discharge process was performed at a current value corresponding 0.05C until the voltage reached 2.0 V, and these processes were collectively defined as one charge/discharge cycle with a charge upper limit of 4.2 V. The weight energy density relative to a net weight of the polyaniline was determined from the discharge capacity obtained at the second cycle of the charge/discharge cycle with a charge upper limit of 4.2 V.

The weight energy densities of Examples 20 and 21 relative to a net weight of the polyaniline, which was determined from the discharge capacity obtained at the second cycle of the charge/discharge cycle with a charge upper limit of 4.2 V, were as excellent as 525 mWh/g and 580 mWh/g, respectively.

While specific forms of the embodiment of the present invention have been shown in the aforementioned inventive examples, the inventive examples are merely illustrative of the invention but not limitative of the invention. It is contemplated that various modifications apparent to those skilled in the art could be made within the scope of the invention.

The nonaqueous electrolyte secondary battery of the present invention can be advantageously used as a nonaqueous electrolyte secondary battery such as a lithium-ion secondary battery. The nonaqueous electrolyte secondary battery of the present invention can be used for the same applications as the prior art secondary batteries, for example, for mobile electronic apparatuses such as mobile PCs, mobile phones and personal data assistants (PDAs), and for driving power sources for hybrid electric cars, electric cars and fuel battery cars.

## Claims

1. A positive electrode for a nonaqueous electrolyte secondary battery comprising:
an electrically conductive polymer (a),
at least one of a polyanionic acid and a metal salt thereof (b), and
a plasticizer (c),
wherein the nonaqueous electrolyte secondary battery comprises a positive electrode, a negative electrode, a separator disposed between the positive electrode and the negative electrode, and an electrolyte solution having an ionic conductivity.

2. The positive electrode for a nonaqueous electrolyte secondary battery according to claim 1, wherein the electrically conductive polymer (a) is at least one of a polyaniline and a polyaniline derivative.

3. The positive electrode for a nonaqueous electrolyte secondary battery according to claim 1 or 2, wherein the plasticizer (c) is at least one of a polyoxyalkylene and a derivative thereof.

4. The positive electrode for a nonaqueous electrolyte secondary battery according to any one of claims 1 to 3, wherein the plasticizer (c) is at least one of a polypropylene glycol and a derivative thereof.

5. The positive electrode for a nonaqueous electrolyte secondary battery according to any one of claims 1 to 4, wherein the plasticizer (c) has a molecular weight of 90 to 2000.

6. The positive electrode for a nonaqueous electrolyte secondary battery according to any one of claims 1 to 5, wherein a proportion of the plasticizer (c) contained in the positive electrode is 0.2 to 15% by weight.

7. The positive electrode for a nonaqueous electrolyte secondary battery according to any one of claims 1 to 6, wherein the polyanionic acid (b) is at least one selected from a group consisting of polyacrylic acid, polymethacrylic acid, polyvinylbenzoic acid, polyallylbenzoic acid, polymethallylbenzoic acid, polymaleic acid, polyfumaric acid and polyglutamic acid.

8. A nonaqueous electrolyte secondary battery comprising the positive electrode according to any one of claims 1 to 7.

9. A method for manufacturing a nonaqueous electrolyte secondary battery, the method comprising steps (I) to (III) below:
(I) a step of preparing a positive electrode and a negative electrode, and disposing a separator between the positive electrode and the negative electrode to produce a stacked component including the positive electrode, the separator and the negative electrode;
(II) a step of housing at least one of the stacked component in a battery container; and
(III) a step of pouring an electrolyte solution into the battery container,
wherein the positive electrode contains an electrically conductive polymer (a), at least one of a polyanionic acid and a metal salt thereof (b) and a plasticizer (c), and
wherein the negative electrode contains a base metal or a material capable of a base metal ion insertion/extraction.
